# EUROPEAN PATENT SPECIFICATION

(11) **EP 2 571 157 B1**
(45) Date of publication and mention of the grant of the patent: **07.08.2019**
(21) Application number: 11181804.3
(22) Date of filing: 19.09.2011
(51) Int. Cl.: H02P 1/26, H02P 21/14, H02P 27/16

(54) **Method and device for controlling power to an electric machine**
Verfahren und Vorrichtung zur Steuerung der Leistung einer elektrischen Maschine
Procédé et dispositif de contrôle de puissance d'une machine électrique

(43) Date of publication of application: 20.03.2013
(73) Proprietor: CG Drives & Automation Sweden AB, 250 24 Helsingborg (SE)
(72) Inventor: Yngvesson, Christer, 262 61 Ängelholm (SE); Karlsson, Per, 253 73 Gantofta (SE)
(74) Representative: AWA Sweden AB

(56) References cited:
- EP-A2- 1 835 613
- WO-A2-2007/139800
- US-B1- 7 023 166
- NAMIKI K ET AL: "Characteristics of speed sensorless vector controlled induction motor drive operating at high effliciency taking core loss into account", APEC 2001. 16TH. ANNUAL IEEE APPLIED POWER ELECTRONICS CONFERENCE AND EXPOSITION. ANAHEIM, CA, MARCH 4 - 8, 2001; [ANNUAL APPLIED POWER ELECTRONICS CONFERENCE], NEW YORK, NY : IEEE, US, vol. 1, 4 March 2001 (2001-03-04), pages 25-31, XP010535969, DOI: 10.1109/APEC.2001.911622 ISBN: 978-0-7803-6618-3
- RAHMAN KASHIF S A ET AL: "Soft starting of induction motors using neuro fuzzy and soft computing", ELECTRICAL ENGINEERING, 2008. ICEE 2008. SECOND INTERNATIONAL CONFERENCE ON, IEEE, PISCATAWAY, NJ, USA, 25 March 2008 (2008-03-25), pages 1-7, XP031279364, ISBN: 978-1-4244-2292-0

## Description

### Technical field

The present disclosure relates to a method and device for controlling AC power to an electric machine.

### Background

The conventional method to control an electric machine, such as an induction motor, with a soft starter is by reducing the voltage to the motor by varying the voltage "off time". The off time could for example be controlled to achieve a desired maximum current level or a constant driving torque. A switch may control the off time of the voltage, and by varying the off time it may be meant to, based on a previous opening of the switch or when the voltage reaches zero, change the state of the switch for a phase of the voltage. The control of the voltage is determined similar for the switches of all phases supplied to the motor. Control values for the switches are determined based on an average behavior of all phases.

Even if the voltage is reduced the fundamental frequency of the voltage is equal to the supplied voltage frequency. That could give a large difference between angular speed of the supplied voltage and angular speed of the rotor in the motor depending on the rotor speed. Due to the large difference in angular speed the flux of the rotor will be low and thereby also the ability of the motor to produce torque. The large difference will further cause a large current use.

Further, without knowledge of the flux in the motor, it is not possible to control the direction of the torque.

Consequently, there is a need for a control method for controlling the AC power to an electric motor that increases the electric motor torque ability and decreases the current used during the procedure.

EP 1 835 613 discloses motor drives, motor speed controllers, motor speed estimation systems, and methods for controlling motor startup speed and for estimating motor speed during startup, in which a speed estimate controller provides a rotor speed estimate based on a first error term from a torque-based MRAS component for a first range of motor speeds and based on a second error term from a rotor flux-based MRAS component for a second range of speeds.

US 7,023,166 discloses a method of controlling the torque of a multiphase induction motor, which includes the step of energizing the stator windings of the motor from a power converter using thyristors, inserted between a multiphase main supply and the windings producing a stator current set point expressed by its amplitude and its phase, predicting phase coincidences between the stator current and the set point, and commanding the power converter so that the windings receive current waves substantially when such coincidences occur.

WO 2007/139800 discloses a matrix converter includes a plurality of switches that electrically connect a multi-phase input voltage source to a multi-phase load; and a controller to output pulse-width modulated (PWM) switching signals to control the switches to produce a multi-phase output voltage from the multi-phase input voltage source. The controller outputs the PWM switching signals by modulating a carrier signal with a time-varying signal having a frequency determined from a desired output frequency for the output voltage.

Document Namiki K et al: "Characteristics of speed sensorless vector controlled induction motor drive operating at high efficiency taking core loss into account", APEC 2001, 16th Annual IEEE Applied Power Electronics Conference and Exposition. Anaheim, CA, March 4-8, 2001, New York, NY: IEEE, US, vol. 1, 4 March 2001, pages 25-31, ISBN: 978-0-7803-6618-3, presents the characteristics of a speed-sensorless vector control method of an induction motor operating at high efficiency and high response, in which core loss is taken into account. The system employs a speed-adaptive rotor-flux observer and a direct-field-oriented control scheme to compensate for the influence of core loss. It investigates the characteristics of speed estimation, torque control, and efficiency when the rotor Dux is changed, and demonstrate the usefulness of the method by experiment.

Document Rahman Kashif S A; Saqib M A "Soft starting of induction motors using neuro fuzzy and soft computing" discloses a soft starter for induction motors comprising a thyristor based AC volatge controller.

### Summary

The invention is defined by the features of method claim 1 and device claim 8. The dependent claims recite advantageous embodiments of the invention.

It is an object of the present invention to provide an improved solution that alleviates the mentioned drawbacks with present devices. Furthermore, it is an object to provide a method and device that may achieve an effective operation control of an electric machine.

According to a first aspect of the invention, this is achieved by providing a method of controlling power to an electric machine, wherein at least one semiconductor switch is provided per phase of a machine AC power, the semiconductor switches supplying the machine AC power to the electric machine. The method comprises the steps of supplying an incoming AC power comprising an incoming voltage and an incoming current to the semiconductor switches, measuring a voltage and current in the machine AC power supplied by the semiconductor switches to the electric machine, estimating a present flux vector based on the measured voltage and current to the electric machine, calculating a reference flux vector based on the estimated present flux vector and a desired operating state of the electric machine, and defining time instants for changing the state of the semiconductor switches based on the reference flux vector and the incoming voltage. The time instants correspond to a behavior of the semiconductor switches such that a new measured voltage with a resulting current to the electric machine is predicted to achieve a new estimated flux vector corresponding to the reference flux vector.

The method may be used in a start procedure, stop procedure or brake procedure of the electric machine. In a start procedure a soft start of the electric machine may be achieved. With the method according to the invention, a control of the electric machine's flux, torque and/or speed may be provided. The desired operating state may comprise control variables describing a desired behavior of the electric machine. When using the method according to the invention, for example as a soft starter method, a starting current used by the electric machine may be reduced at the same time as a starting torque in the electric machine may be increased compared to known methods. Due to the advantages of the invention, such soft starter method may be used in application wherein prior art methods are not suitable. Such applications could be applications with high initial load torque, such as crushers, applications with need for fast and controlled braking, such as saw applications or high inertia loads, or applications wherein it is advantageous with a defined start time. Further, a device using a control method according to the invention may need less cooling then if using a conventional method, thereby providing a device of less physical size. The desired operating state of the electric machine may be estimated using a Kalman filter based on the measured voltage and current to the electric machine. The electric machine may be an electric motor. The semiconductor switches may be arranged in series with the incoming AC power and the electric machine. The new measured voltage and the new estimated flux vector may become a measured voltage and a present flux vector in a new cycle of the method. The feedback loop in the method may provide a continuously updated reference flux vector that may continuously be calculated based on the present flux vector that also may be continuously updated due to new estimations of the changing machine AC power. Thereby, the behavior of the electric machine may be continuously changing according to the desired operating state control variable.

In one embodiment, the step of defining time instants for the semiconductor switches may comprise calculating a voltage vector based on the reference flux vector and the estimated present flux vector, and said time instants may correspond to a behavior of the semiconductor switches such that a new measured voltage to the electric machine may be predicted to achieve a new voltage vector corresponding to the calculated voltage vector.

A voltage vector may function as a control input for the flux in the electric machine, i.e. as a control input for the amplitude and frequency of the voltage supplied to the electric machine. The flux, torque and/or speed in the electric machine may thereby be controlled in a suitable way since the feedback loop continuously updates the control input based on present and desired behavior of the electric machine.

In a further embodiment, the voltage vector may be an average voltage vector and the step of calculating a voltage vector may comprise dividing the average voltage vector into a plurality of voltage sectors, wherein each voltage sector may contribute with a part of the average voltage vector, such that the plurality of voltage sectors together form the voltage vector, and wherein the time instants may correspond to a behavior of the at least one semiconductor switch per phase such that a new measured voltage to the electric machine may be predicted to achieve a new voltage vector corresponding to the calculated voltage vector.

If the frequency of the machine AC power to the electric machine were modulated based on a zero frequency signal, i.e. a DC power, the voltage vector may have been used directly as a control input to achieve a desired flux in the electric machine. That may not be possible when the incoming AC power is used as a base for the modulation. By dividing the average voltage vector into voltage sectors, it may be possible to achieve the desired new flux/voltage vector to the electric machine based on the incoming AC power. Further, it may be possible to define time instants individually for each semiconductor switch for the separate phases. The voltage sectors may together give the same flux in the electric machine as the voltage vector, i.e. the voltage sectors are parts contributing to the total average voltage vector. Each voltage sector may represent different ways of forming the average voltage vector. The incoming AC power may comprise at least two phases. A line-to-line voltage may be a voltage measured between two phases. With a three phase incoming AC power, four voltage sectors may be provided for three line-to-line voltages representing four combinations of phases to form the average voltage vector. The combinations may be the first and the second phase, the second and the third phase, the first and the third phase and all three phases. An additional, fifth, combination may be a representation of none of the phases. A voltage sector may be a time range of one or several line-to-line voltages. The method may function in a similar way with a system with more than three phases in the incoming AC power. In such system, there may be several line-to-line voltages since there are several phases. Hence, there may be several voltage sectors provided for the line-to-line voltages that represent the combinations of phases that may be used for forming the average voltage vector.

In one embodiment, each voltage sector may represent a combination of at least two phases, wherein the voltage in said at least two phases are adapted to achieve the new voltage vector corresponding to the calculated voltage vector.

To achieve an average voltage vector to the electric machine that corresponds to the calculated voltage vector, the average voltage vector may be divided into voltage sectors, such that time instants may be calculated individually for each semiconductor switch. The average voltage vector may be achieved by the voltage from a combination of at least two phases. A line-to-line voltage may be associated with each possible combination of two phases. Each voltage sector may be calculated based on a line-to-line voltage.

In one embodiment, the at least one semiconductor switch per phase of the machine AC power may comprise one bidirectional semiconductor switch or two anti-parallel semiconductor switches per phase of the machine AC power.

A bidirectional switch may be provided as a switch that conducts when it receives a firing instant, and continue conducting until the current passing through the bidirectional switch reaches zero. By controlling the time when the bidirectional switch receives the firing instant, i.e. time instant, the behavior of the outgoing voltage from the switch may be controlled. The anti-parallel switches may be two switches arranged in parallel but with their polarities reversed relative to each other. The behavior of the anti-parallel switches may be similar as a bidirectional switch, providing a possibility to control the time instants of the switches to control the behavior of the outgoing voltage from the switches.

In another embodiment, each of the semiconductor switches may be dedicated to one phase of the machine AC power only.

By providing semiconductor switches that may be dedicated to one phase of the machine AC power only, the number of switches used in the method may be kept at a minimum when cross-couplings between phases are not needed. The semiconductor switches may be arranged in series with the incoming AC power and the electric machine. By being dedicated to one phase only it may be meant that each semiconductor switch is connected to only one phase of the incoming AC power and only one phase of the machine AC power.

In one embodiment, the semiconductor switches may be thyristors.

The semiconductor switches may be thyristors. The time instants for the semiconductor switches may thereby be provided as firing instants for the thyristors. A thyristor may be conducting from the moment it receives the firing instant and until the current passing through the thyristor reaches zero. Two anti-parallel thyristors may be provided for each phase of the machine AC power. One firing instant may be provided for each thyristor.

In another embodiment, the desired operating state may be represented by a desired speed state of the electric machine.

By calculating a reference flux vector based on a desired speed of the electric machine, a specific acceleration or deceleration of the electric machine may be achieved. For instance a suitable acceleration may be provided in a soft start procedure to accelerate the electric machine up to a nominal speed without causing high mechanical stress on the electric machine.

In a further embodiment, the desired operating state may be represented by a desired operating torque of the electric machine.

By calculating a reference flux vector based on a desired speed state of the electric machine, the electric machine may be accelerated or decelerated with a suitable torque along the procedure. For instance, with an electric machine with high torque demands in a start procedure, a soft start of the electric machine may be provided, still providing the necessary torque in the electric machine.

In one embodiment, the electric machine may be an induction motor or an induction generator.

The method of the invention may be used on an induction motor or induction generator. The method may be used in start procedures (acceleration), braking procedures or stop procedures (deceleration).

According to a second aspect of the invention, a controller device is provided for controlling power to an electric machine. The controller device comprises at least one semiconductor switch per phase of a machine AC power, wherein the semiconductor switches are adapated to receive an incoming AC power and supply the machine AC power to the electric machine. The incoming AC power comprises an incoming voltage (25) and an incoming current. The controller device further comprises a measuring device adapted to measure a voltage and current supplied by the semiconductor switches to the electric machine in the machine AC power, an estimating device adapted to estimate a present flux vector for the electric machine based on the measured voltage and current to the electric machine, a calculating device adapted to calculate a reference flux vector based on the present flux vector and a desired operating state of the electric machine, and a modulator adapted to define time instants for changing the state of the semiconductor switches based on the reference flux vector and the incoming voltage. Said time instans correspond to a behavior of the semiconductor switches such that a new measured voltage with a resulting current to the electric machine is predicted to achieve a new estimated flux vector corresponding to the reference flux vector.

The controller device may be used in controlling the power to an electric machine in a start procedure, stop procedure or brake procedure. In a start procedure a soft start of the electric machine may be achieved. The controller device may achieve a control of the electric machine's flux, torque and/or speed. The desired operating state may comprise control variables describing a desired behavior of the electric machine. When using the controller device according to the invention, for example as a soft starter, a starting current used by the electric machine may be reduced at the same time as a starting torque in the electric machine may be increased compared to known controller devices. Due to the advantages of the invention, such soft starter may be used in applications wherein prior art methods are not suitable. Such applications could be applications with electric machines with high initial load torque, such as crushers, applications with need for fast and controlled braking, such as saw applications or high inertia loads, or applications wherein it is advantageous with a defined start time or stop time. Further, a controller device according to the invention may need less cooling then if using a conventional device, thereby providing a device of less physical size. The desired operating state of the electric machine may be estimated by the controller device using a Kalman filter based on the measured voltage and current to the electric machine. The electric machine may be an electric motor. The semiconductor switches may be arranged in series with the incoming AC power and the electric machine. The new measured voltage and the new estimated flux vector may become a measured voltage and a present flux vector in a continuous use of the controller device. The feedback loop provided by the controller device may provide a continuously updated reference flux vector that may continuously be calculated based on the present flux vector that also may be continuously updated due to new estimations of the changing machine AC power. Thereby, the behavior of the electric machine may be continuously changing according to the desired operating state control variable provided in the controller device.

In one embodiment, the modulator may be adapted to calculate a voltage vector based on the reference flux vector and the estimated present flux vector, and the time instants may be defined to correspond to a behavior of the semiconductor switches such that a new measured voltage to the electric machine may be predicted to achieve a new voltage vector corresponding to the calculated voltage vector.

A voltage vector may function as a control input for the flux in the electric machine, i.e. as a control input for the amplitude and frequency of the voltage supplied to the electric machine. The flux, torque and/or speed in the electric machine may thereby be controlled in a suitable way since the feedback loop continuously updates the control input based on present and desired behavior of the electric machine.

In a further embodiment, the voltage vector may be an average voltage vector and the modulator may be adapted to divide the average voltage vector into a plurality of voltage sectors, wherein each voltage sector contributes with a part of the average voltage vector, such that the plurality of voltage sectors together form the voltage vector, and wherein the time instants are adapted to be defined to correspond to a behavior of the at least one semiconductor switch per phase such that a new measured voltage to the electric machine is predicted to achieve a new voltage vector representing all phases corresponding to the calculated voltage vector.

If the frequency of the machine AC power to the electric machine were adapted to be modulated based on a zero frequency signal, i.e. a DC signal, the voltage vector may have been used directly as a control variable to achieve a desired flux/voltage to the electric machine. That may not be possible when the incoming AC power may be used as a base for the modulation. By dividing the average voltage vector into voltage sectors, it may be possible to achieve the desired flux vector to the electric machine based on the incoming AC power. The voltage sectors may together give the same average flux in the electric machine as the voltage vector, i.e. the voltage sectors are parts contributing to the total average voltage vector. Each voltage sector may represent different ways of forming the average voltage vector. The incoming AC power may comprise at least two phases. A line-to-line voltage may be a voltage measured between two phases. With a three phase incoming AC power, four voltage sectors may be provided for three line-to-line voltages representing four combinations of phases to form the average voltage vector. The combinations may be the first and the second phase, the second and the third phase, the first and the third phase or all three phases. An additional, fifth, combination may be a representation of none of the phases. A voltage sector may be a time range of one or several line-to-line voltages. The controller device may function in a similar way with more than three phases in the incoming AC power. In such system, there may be several line-to-line voltages since there are several phases. Hence, there may be several voltage sectors provided for the line-to-line voltages that represent the combinations of phases that may be used for forming the average voltage vector.

In another embodiment, the at least one semiconductor switch per phase of the machine AC power may comprise one bidirectional semiconductor switch or two anti-parallel semiconductor switches per phase of the machine AC power.

A bidirectional switch may be provided as a switch that conducts when it receives a firing instant, and continue conducting as long as the voltage passing through the bidirectional switch is not reversed. By controlling the time when the bidirectional switch receives the firing instant, i.e. time instant, the behavior of the outgoing voltage from the switch may be controlled. The anti-parallel switches may be two switches arranged in parallel but with their polarities reversed relative to each other. The behavior of the anti-parallel switches may be similar as a bidirectional switch, providing a possibility to control the time instants of the switches to control the behavior of the outgoing voltage from the switches.

In a further embodiment, each of the semiconductor switches may be dedicated to one phase of the machine AC power only.

By providing semiconductor switches that may be dedicated to one phase of the machine AC power only, the number of switches used in the method may be kept at a minimum. The semiconductor switches may be arranged in series with the incoming AC power and the electric machine. By being dedicated to one phase only it may be meant that each semiconductor switch is connected to only one phase of the incoming AC power and only one phase of the machine AC power.

### Brief Description of the Drawings

The invention will in the following be described in more detail with reference to the enclosed drawings, wherein:
Fig 1 shows a schematic block diagram of a device according to an embodiment of the invention.
Fig 2 shows a schematic voltage and flux angle simulation plot according to an embodiment of the invention.
Fig 3 shows a schematic time instant diagram according to an embodiment of the invention.
Fig 4 shows a schematic one phase example plot.
Fig 5 shows a schematic one phase simulation plot in a three phase example according to an embodiment of the invention.
Fig 6 shows a schematic rotor flux simulation plot according to an embodiment of the invention.

### Description of Embodiments

The present invention will be described more fully hereinafter with reference to the accompanying drawings, in which preferred embodiments of the invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art. In the drawings, like numbers refer to like elements.

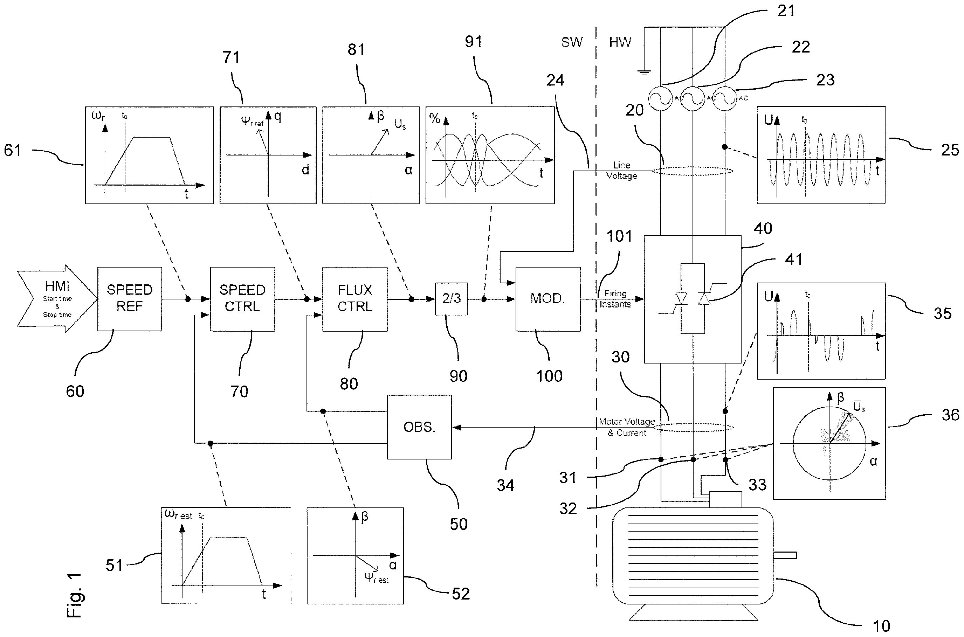

Fig 1 illustrates a schematic block diagram of a device performing the method according to the invention. Parts in fig 1 will hereby be presented in more detail.

An electric machine 10, for instance an electric motor, is supplied with a machine AC power 30. The machine AC power 30 is supplied to the electric machine 10 by a plurality of semiconductor switches 40. The semiconductor switches 40 receive an incoming AC power 20 that is modified to supply the machine AC power 30. In the described embodiment, the incoming AC power 20 comprises three phases 21, 22, 23. The illustration 25 shows the voltage supply in one phase 23 of the incoming AC power 20 as a function of time t. The plurality of semiconductor switches 40 comprises at least one semiconductor switch 41 per phase. For each phase of the incoming AC power 20, there is dedicated one bidirectional switch or two anti-parallel semiconductor switches. Each semiconductor switch 41 is only connected to one phase 21, 22, 23 of the incoming AC power 20 and one phase 31, 32, 33 of the machine AC power 30.

The machine AC power 30 comprises three phases 31, 32, 33 supplied to the electric machine 10. The illustration 35 shows an example voltage supplied by a thyristor in one phase 33 of the machine AC power 30 as a function of time t.

An observer 50 estimates the states, i.e. flux, speed and/or torque, of the electric machine 10 based on measured voltage and current in the machine AC power 30 supplied to the electric machine 10. Based on the measured voltage and current to the electric machine 10, the observer 50 uses a Kalman filter to estimate a present flux vector 52 and a present rotor speed 51. The present rotor speed 51 and the present flux vector 52 are calculated estimations based on the measured voltage and current for the phases 31, 32, 33 of the machine AC power 30. The observer 50 is an implementation of the model described in the Ph.D. thesis Induction Machine Speed Estimation, Observations on Observers, by Bo Peterson, 1996 (CODEN: LUTEDX/(TEIE-1009)/1-136/(1996)). The present flux vector 52 is illustrated in an exemplary moment of time (e.g. t₀).

A speed reference 61 is calculated by a speed reference module 60 based on start and stop data entered through either a user interface (HMI) or thru any superior source. The speed reference 61 may state a desired speed behavior of the electric machine 10 rotor during a starting, braking or stopping procedure. In a soft start application, the speed reference 61 states a curve of the acceleration of the electric machine 10 as a function of time t. The speed reference 61 may in an alternative embodiment state a desired torque or flux behavior of the electric machine 10 rotor during a starting, braking or stopping procedure.

A speed error is calculated based either on the estimated speed 51 from the observer 50 or a speed measurement from a speed sensor or encoder.

A speed controller 70 uses a speed control algorithm to calculate a reference flux vector 71 for the rotor flux of the electric machine 10 based on the estimated rotor speed 51 and the speed reference 61. The reference flux vector 71 is illustrated in an exemplary moment of time (e.g. t₀).

By increasing the angular speed of the present flux vector 52 compared to the angular speed of the rotor in the electric machine 10, a motoring (driving) torque will be produced in the electric machine 10. Opposite, if the angular speed of the present flux vector 52 is decreased below the rotor speed, a generating torque is achieved. This is used to increase respective decrease the speed of the electric machine 10.

To increase the performance, i.e. reduce current, torque or speed ripple, gain scheduling and/or different control limits are used during acceleration, constant speed and deceleration of the electric machine 10. As example: During acceleration, both inertia and load torque on the electric machine 10 counteracts the speed increment. It is therefore unnecessary for the speed controller 70 to apply high braking torque if the speed is only slightly too high.

The sign of the torque in the electric machine 10 is determined by the angular speed of the present flux vector 52 relative to the rotor speed in the electric machine 10. The amplitude of the torque is determined by both the angular speed of the present flux vector 52 relative to the rotor speed and the amplitude of the present flux vector 52 (magnetization level). By controlling the magnetization level separately, the problem with unnecessary torque ripple may be reduced. It also increases the ability to control the speed of a lightly loaded machine with low inertia. The torque ripple appears since the fundamental frequency of the incoming AC power 20 (mains power) is in the same range as the frequency of the modulated machine AC power 30. High torque ripple with a lightly loaded machine with low inertia will generate undesired speed variations and negatively influence the performance of the speed controller 70.

A flux controller 80 receives the reference flux vector 71 from the speed controller 70. The error between the estimated present flux vector 52 from the observer 50 and the reference flux vector 71 defines a voltage vector 81, in respect of amplitude and angle, to request from a modulator 100. The voltage vector 81 is illustrated in an exemplary moment of time (e.g. t₀). Before the modulator 100 receives a voltage vector, a 2-to-3 phase transformer 90 receives the voltage vector 81 from the flux controller 80 and converts it to three phase quantities. The output from the 2-to-3 phase transformer 90 is a desired three-phase voltage reference 91. The modulator 100 then uses the phase quantities in the desired three-phase voltage reference 91 as control input and the phases 21, 22, 23 of the incoming AC power 20 as input 24 to define time instants 101 for the semiconductor switches 40. The semiconductor switches 40 thereby modify the incoming AC power 20 such that the machine behavior corresponds to the desired speed reference 60. This is due to the feedback loop from the machine AC power 30 via the speed reference 60 to the modulator 100.

A dashed line in fig 1 indicates which parts that are intended to be implemented in software (SW) and which that are intended to be implemented in hardware (HW).

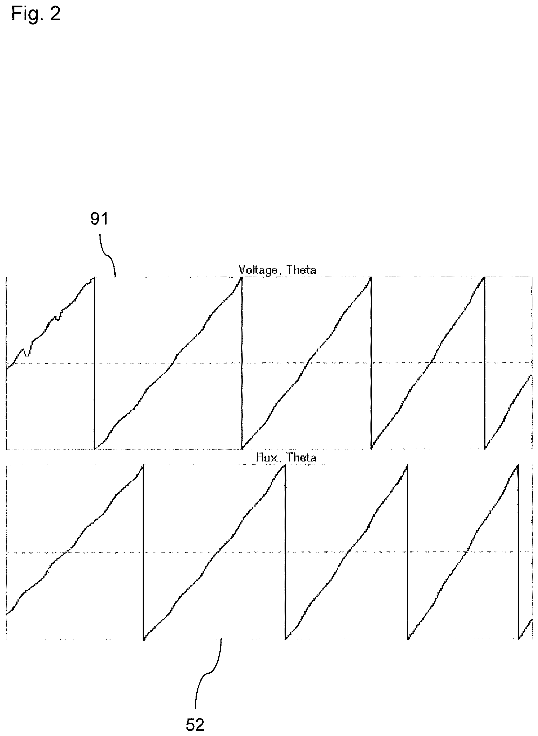

Fig 2 shows a simulation result of the desired voltage vector 81 angle in relation to the estimated present flux vector 52 angle. The top trace shows the calculated voltage vector 81 angle to be requested and the bottom trace the estimated present flux vector 52 angle.

The flux controller 80 uses feed forward on the calculated voltage vector 81 amplitude to reduce flux variations due to angle change.

If the limitation for the direct modulation is reached in sense of available incoming voltage 24 to apply in the requested direction the requested voltage vector is synchronized with a mains supply voltage vector. By doing so, a bump less transfer to conventional start may be achieved for the final acceleration.

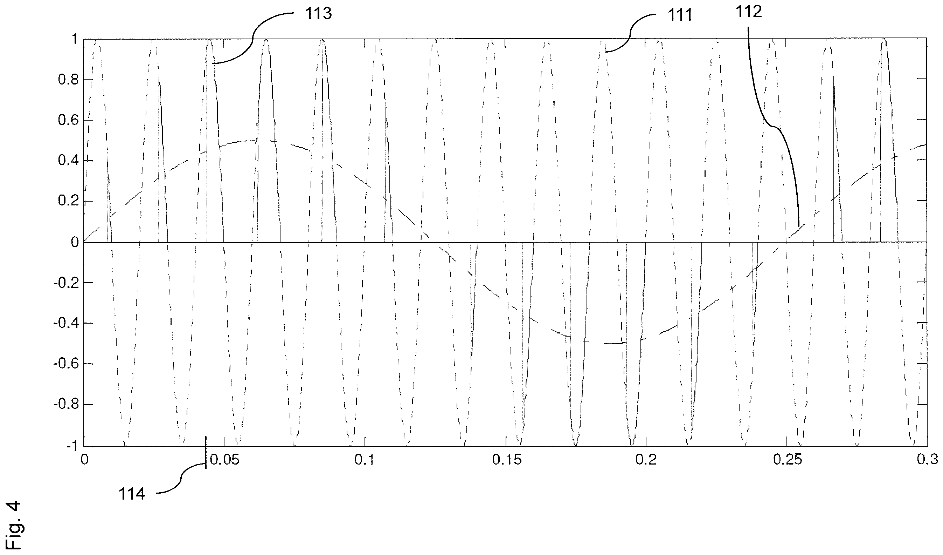

Since a soft starter does not contain any intermediate DC link, the voltage applied on the electric machine 10 has to be directly modulated from the incoming AC power 20. A fired semiconductor switch, such as a thyristor 41, will conduct until the current through it becomes zero, see further fig 4. The time the thyristor 41 is conducting is determined by a main circuit and a firing instant 101. During the time the thyristors 41 are conducting the AC power sweeps along an arc and forming a voltage sector (see 35 and 36 in fig 1). Reference 36 in fig 1 shows an example average voltage vector Uₛ supplied to the electric motor 10 by the thyristors 40. The grey fields show the voltage sectors which all contributes to the average voltage vector Uₛ. The thyristors 40 are controlled such that voltage sectors will provide an average voltage vector Uₛ to the electric machine 10 that is similar to the calculated voltage vector 81.

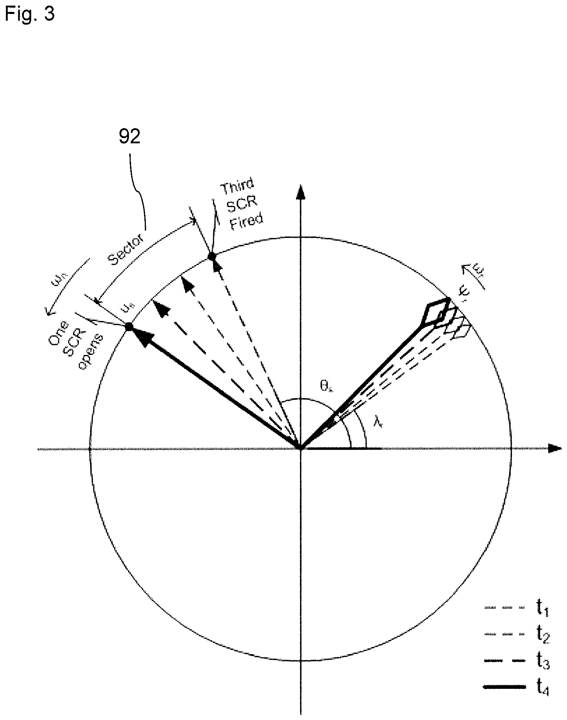

Fig 3 shows an example with four time instants. Two thyristors 41 are conducting at instant t₁ and a third thyristor is fired. At t₄ the current crosses zero in one of the initially conducting thyristors 41. The time instants t₂ and t₃ are only shown to demonstrate the sequence. All quantities are expressed in the α-β plane (stator coordinates). ωᵣ is the angular speed of the rotor, ωₙ is the angular speed of the incoming AC power supply 20. λᵣ is the angle of the present rotor flux vector, ψᵣ denotes the rotor flux and Uₛ the voltage vector.

In one alternative, the voltage vector 81 quantities are converted to voltage references by 2 to 3 phase transformation and predictive recalculation 90. The predictive recalculation convert voltage vector angle θ_{ref} in respect of quantities such as ωᵣ, ωₙ, requested voltage vector amplitude, power factor and/or back-emf (back-electromotive force). Any consisting error in the prediction is handled by the feedback loop of the flux controller 80.

The desired three phase voltage reference 91 together with the incoming AC power 20 line-to-line voltages defines the firing instants 101 in the modulator 100. Each voltage reference 91 corresponds to one line-to-line voltage. The sign of the voltage reference 91 determines if the thyristors 41 should be fired on positive or negative half periods. The instantaneous value of the voltage reference 91 determines the off time (delay from zero crossing).

In a second alternative, the possible voltage sectors are evaluated after a predictive recalculation. The one of them, if any, which best contributes to the desired calculated voltage vector 81 will be used and the corresponding thyristor 41 is fired.

Fig 4 illustrates a thyristor 41 behavior in a one phase example with resistive load. The figure shows the incoming voltage 111, the reference voltage 112 and the modulated output voltage 113. The reference voltage 112 is based on the desired voltage reference 91. At time 114 a time instant 101 is sent to the thyristor 41 whereby the thyristor 41 starts to conduct such that the output voltage 113 of the thyristor 41 follows the incoming voltage 111. The thyristor 41 conducts until the incoming voltage 111 reaches zero. Thereby, the time instants are defined such that the output voltage 113 of the thyristor 41 corresponds to the reference voltage 112.

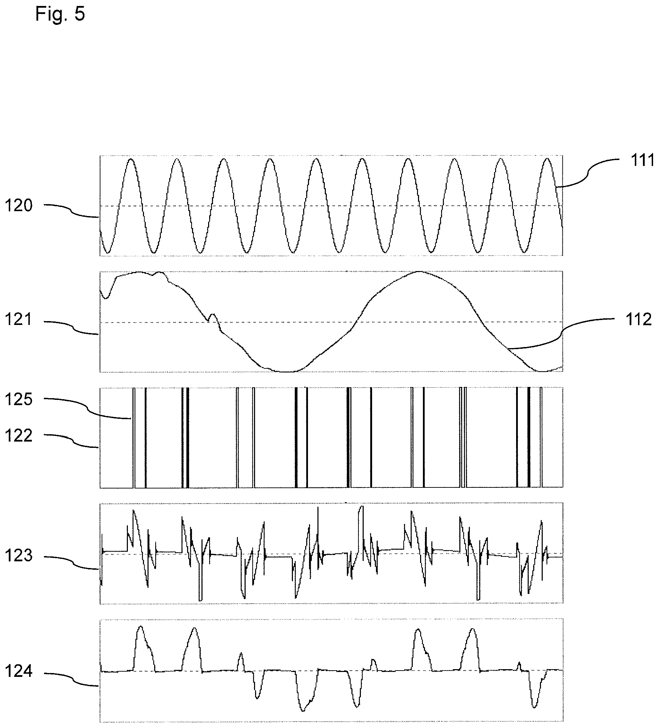

Fig 5 shows a simulation of one phase in a three phase application. The top trace 120 shows the incoming voltage 111, and the second trace 121 shows the reference voltage 112. As described above, the incoming voltage 111 and the reference voltage 112 determine the firing instants, i.e. the trace 122 shown in the middle. The two bottom traces 123, 124 show the direct modulated machine voltage and the resulting current respectively.

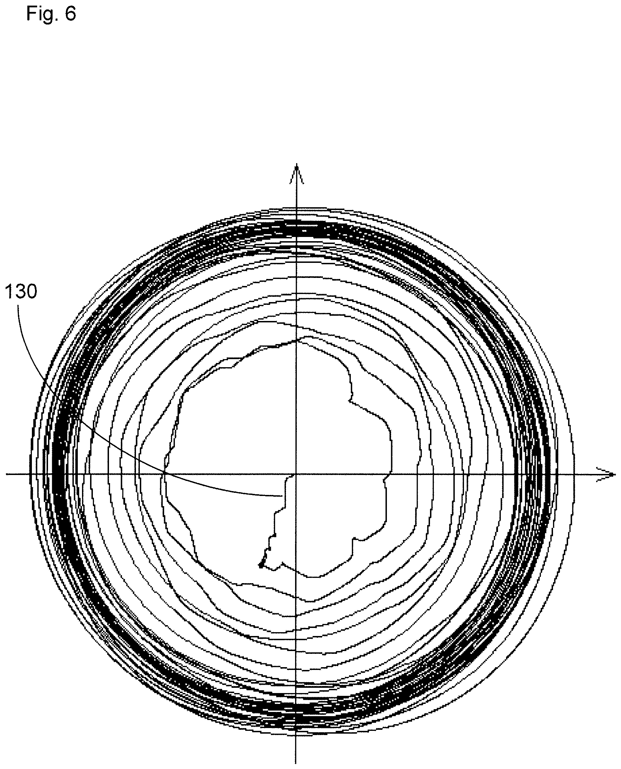

Fig 6 shows a simulation of the present rotor flux 52 during start. From origin of coordinates the trace 130 shows how the rotor is DC-magnetized. After a certain time the rotor flux starts to rotate counter-clockwise with a gradually increasing magnitude. In the described method, the present rotor flux is always controlled to follow the reference flux.

In the drawings and specification, there have been disclosed preferred embodiments and examples of the invention and, although specific terms are employed, they are used in a generic and descriptive sense only and not for the purpose of limitation, the scope of the invention being set forth in the following claims.

## Claims

1. Method of controlling power (30) by means of a soft starter to an electric machine (10), wherein at least one semiconductor switch (41) is provided per phase (31, 32, 33) of a machine AC power, the semiconductor switches supplying the machine AC power to the electric machine, wherein the at least one semiconductor switch for each phase comprises one bidirectional thyristor or two anti-parallel thyristors dedicated to one phase of the machine AC power, the method comprising the steps of
supplying an incoming AC power (20), comprising an incoming voltage and an incoming current, to the semiconductor switches (40),
measuring a voltage and current in the machine AC power (30) supplied by the semiconductor switches to the electric machine (10),
estimating a present flux vector (52) and a present operating state (51) of the electric machine that is the speed or torque of the machine based on the measured voltage and current to the electric machine terminals,
**characterised by** :
calculating a reference flux vector (71) based on the error between the estimated present operating state of the machine and a desired operating state (61) of the electric machine (10),
calculating a voltage vector (81) based on the error between the estimated present flux vector (52) and the reference flux vector (71), and
defining time instants (101) for changing the state of the thyristors in the semiconductor switches (40) based on the voltage vector (81) and the incoming voltage (24), said time instants corresponding to a behavior of the thyristors in the semiconductor switches such that a new measured voltage with a resulting current to the electric machine is predicted to achieve a new estimated flux vector corresponding to the reference flux vector (71).

2. Method according to claim 1, wherein the step of defining time instants (101) for the semiconductor switches (40) comprises calculating a voltage vector (81) based on the reference flux vector (71) and the estimated present flux vector (51, 52), and wherein said time instants correspond to a behavior of the semiconductor switches such that a new measured voltage to the electric machine (10) is predicted to achieve a new voltage vector corresponding to the calculated voltage vector (81).

3. Method according to claim 2, wherein the voltage vector (81) is an average voltage vector and the step of calculating a voltage vector comprises dividing the average voltage vector into a plurality of voltage sectors, wherein each voltage sector contributes with a part of the average voltage vector, such that the plurality of voltage sectors together form the average voltage vector, and wherein the time instants (101) correspond to a behavior of the at least one semiconductor switch (41) per phase such that a new measured voltage to the electric machine is predicted to achieve a new voltage vector corresponding to the calculated voltage vector (81).

4. Method according to claim 3, wherein each voltage sector represents a combination of at least two phases, wherein the voltage in said at least two phases are adapted to achieve the new voltage vector corresponding to the calculated voltage vector (81).

5. Method according to any of the preceding claims, wherein the desired operating state (61) is represented by a desired speed state of the electric machine (10).

6. Method according to any of the preceding claims, wherein the desired operating state (61) is represented by a desired torque state of the electric machine (10).

7. Method according to any of the preceding claims, wherein the electric machine (10) is an induction motor or an induction generator.

8. A soft starter controller device for controlling power (30) to an electric machine (10), the controller device comprising :
at least one semiconductor switch (41) per phase of a machine AC power (30), wherein the semiconductor switches (40) are adapated to receive an incoming AC power (20) and supply the machine AC power to the electric machine, wherein the incoming AC power comprises an incoming voltage (25) and an incoming current, wherein the at least one semiconductor switch for each phase comprises one bidirectional thyristor or two anti-parallel thyristors dedicated to one phase of the machine AC power,
a measuring device (50) adapted to measure a voltage and current, supplied by the semiconductor switches (40) to the electric machine, in the machine AC power (30),
an estimating device (50) adapted to estimate a present flux vector (52) for the electric machine and a present state (51) of the electric machine that is the speed or torque of the machine based on the measured voltage and current to the electric machine terminals,
**characterised by** :
a first controller (70) adapted to calculate a reference flux vector (71) based on the error between the estimated present operating state of the electric machine and a desired operating state (61) of the electric machine (10),
a second controller (80) adapted to calculate a voltage vector (81) based on the error between the estimated present flux vector (52) and the reference flux vector (71), and
a modulator (100) adapted to define time instants (101) for changing the state of the semiconductor switches (40) based on the voltage vector (81) and the incoming voltage (25), said time instans corresponding to a behavior of the semiconductor switches such that a new measured voltage with a resulting current to the electric machine is predicted to achieve a new estimated flux vector corresponding to the reference flux vector (71).

9. The soft starter controller device according to claim 8, wherein the modulator (100) is adapted to calculate a voltage vector (81) based on the reference flux vector (71) and the estimated present flux vector (51, 52), and wherein said time instants (101) are defined to correspond to a behavior of the semiconductor switches (40) such that a new measured voltage to the electric machine (10) is predicted to achieve a new voltage vector corresponding to the calculated voltage vector.

10. The soft starter controller device according to claim 9, wherein the voltage vector (81) is an average voltage vector and the modulator (100) is adapted to divide the average voltage vector into a plurality of voltage sectors, wherein each voltage sector contributes with a part of the average voltage vector, such that the plurality of voltage sectors together form the voltage vector, and wherein the time instants (101) are adapted to be defined to correspond to a behavior of the at least one semiconductor switch (41) per phase such that a new measured voltage to the electric machine (10) is predicted to achieve a new voltage vector representing all phases corresponding to the calculated voltage vector.

## Patentansprüche

1. Verfahren zur Steuerung der Leistung (30) einer elektrischen Maschine (10) mittels eines Sanftanlassers, wobei mindestens ein Halbleiterschalter (41) pro Phase (31, 32, 33) einer Maschinen-Wechselstromleistung vorgesehen ist, wobei die Halbleiterschalter, der elektrischen Maschine Maschinen-Wechselstromleistung zuführen, wobei der mindestens eine Halbleiterschalter für jede Phase einen Zweirichtungsthyristor oder zwei antiparallele Thyristoren umfasst, die einer Phase der Maschinen-Wechselstromleistung zugewiesen sind, wobei das Verfahren folgende Schritte umfasst
Versorgen der Halbleiterschalter (40) mit einer eingehenden Wechselstromleistung (20), die eine Eingangsspannung und einen Eingangsstrom umfasst,
Messen einer Spannung und eines Stroms in der Maschinen-Wechselstromleistung (30), die der elektrischen Maschine (10) durch die Halbleiterschalter zugeführt wird,
Schätzen eines vorliegenden Flussvektors (52) und eines vorliegenden Betriebszustands (51) der elektrischen Maschine, der die Drehzahl oder das Drehmoment der Maschine ist, basierend auf der gemessenen Spannung und dem gemessenen Strom an den Anschlüssen der elektrischen Maschine,
**gekennzeichnet durch**:
Berechnen eines Referenzflussvektors (71) basierend auf dem Fehler zwischen dem geschätzten vorliegenden Betriebszustand der Maschine und einem gewünschten Betriebszustand (61) der elektrischen Maschine (10),
Berechnen eines Spannungsvektors (81) basierend auf dem Fehler zwischen dem geschätzten vorliegenden Flussvektor (52) und dem Referenzflussvektor (71), und
Definieren von Zeitpunkten (101) zum Ändern des Zustands der Thyristoren in den Halbleiterschaltern (40) basierend auf dem Spannungsvektor (81) und der Eingangsspannung (24), wobei die Zeitpunkte einem Verhalten der Thyristoren in den Halbleiterschaltern entsprechen, sodass eine neue gemessenen Spannung mit einem resultierenden Strom an der elektrischen Maschine vorhergesagt wird, um einen neuen geschätzten Flussvektor zu erreichen, der dem Referenzflussvektor (71) entspricht.

2. Verfahren nach Anspruch 1, wobei der Schritt des Definierens von Zeitpunkten (101) für die Halbleiterschalter (40) das Berechnen eines Spannungsvektors (81) basierend auf dem Referenzflussvektor (71) und dem geschätzten vorliegenden Flussvektor (51, 52) umfasst, und wobei die Zeitpunkte einem Verhalten der Halbleiterschalter entsprechen, sodass eine neue gemessene Spannung an der elektrischen Maschine (10) vorhergesagt wird, um einen neuen Spannungsvektor zu erreichen, der dem berechneten Spannungsvektor (81) entspricht.

3. Verfahren nach Anspruch 2, wobei der Spannungsvektor (81) ein Durchschnittsspannungsvektor ist und der Schritt des Berechnen eines Spannungsvektors das Unterteilen des Durchschnittsspannungsvektors in mehrere Spannungssektoren umfasst, wobei jeder Spannungssektor mit einem Teil des Durchschnittsspannungsvektors beiträgt, sodass die mehreren Spannungssektoren zusammen den Durchschnittsspannungsvektor bilden, und wobei die Zeitpunkte (101) einem Verhalten des mindestens einen Halbleiterschalters (41) pro Phase entsprechen, sodass eine neue gemessene Spannung an der elektrischen Maschine vorhergesagt wird, um einen neuen Spannungsvektor zu erreichen, der dem berechneten Spannungsvektor (81) entspricht.

4. Verfahren nach Anspruch 3, wobei jeder Spannungssektor eine Kombination aus mindestens zwei Phasen darstellt, wobei die Spannung in den mindestens zwei Phasen angepasst ist, um den neuen Spannungsvektor zu erreichen, der dem berechneten Spannungsvektor (81) entspricht.

5. Verfahren nach einem der vorhergehenden Ansprüche, wobei der gewünschte Betriebszustand (61) durch einen gewünschten Drehzahlzustand der elektrischen Maschine (10) dargestellt wird.

6. Verfahren nach einem der vorhergehenden Ansprüche, wobei der gewünschte Betriebszustand (61) durch einen gewünschten Drehmomentzustand der elektrischen Maschine (10) dargestellt wird.

7. Verfahren nach einem der vorhergehenden Ansprüche, wobei die elektrische Maschine (10) ein Induktionsmotor oder ein Induktionsgenerator ist.

8. Sanftanlasser-Steuervorrichtung zur Steuerung der Leistung (30) einer elektrischen Maschine (10), wobei die Steuervorrichtung umfasst:
mindestens einen Halbleiterschalter (41) pro Phase einer Maschinen-Wechselstromleitung (30), wobei die Halbleiterschalter (40) angepasst sind, eine eingehende Wechselstromleistung (20) zu empfangen und der elektrischen Maschine die Maschinen-Wechselstromleistung zuzuführen, wobei die eingehende Wechselstromleistung eine Eingangsspannung (25) und einen Eingangsstrom umfasst, wobei der mindestens eine Halbleiterschalter für jede Phase einen Zweirichtungsthyristor oder zwei antiparallele Thyristoren umfasst, die einer Phase der Maschinen-Wechselstromleistung zugewiesen sind, eine Messvorrichtung (50), die angepasst ist, eine Spannung und einen Strom in der Maschinen-Wechselstromleistung (30) zu messen, die der elektrischen Maschine durch die Halbleiterschalter (40) zugeführt werden,
eine Schätzvorrichtung (50), die angepasst ist, einen vorliegenden Flussvektor (52) für die elektrische Maschine und einen vorliegenden Zustand (51) der elektrischen Maschine, der die Drehzahl oder das Drehmoment der Maschine ist, basierend auf der gemessenen Spannung und dem gemessenen Strom an den Anschlüssen der elektrischen Maschine zu messen,
**gekennzeichnet durch**:
eine erste Steuerung (70), die angepasst ist, einen Referenzflussvektor (71) basierend auf dem Fehler zwischen dem geschätzten vorliegenden Betriebszustand der elektrischen Maschine und einem gewünschten Betriebszustand (61) der elektrischen Maschine (10) zu berechnen,
eine zweite Steuerung (80), die angepasst ist, einen Spannungsvektor (81) basierend auf dem Fehler zwischen dem geschätzten vorliegenden Flussvektor (52) und dem Referenzflussvektor (71) zu berechnen, und
einen Modulator (100), der angepasst ist, Zeitpunkte (101) zum Ändern des Zustands der Halbleiterschalter (40) basierend auf dem Spannungsvektor (81) und der Eingangsspannung (25) zu definieren, wobei die Zeitpunkte einem Verhalten der Halbleiterschalter entsprechen, sodass eine neue gemessene Spannung mit einem resultierenden Strom an der elektrischen Maschine vorhergesagt wird, um einen neuen geschätzten Flussvektor zu erreichen, der dem Referenzflussvektor (71) entspricht.

9. Sanftanlasser-Steuervorrichtung nach Anspruch 8, wobei der Modulator (100) angepasst ist, einen Spannungsvektor (81) basierend auf dem Referenzflussvektor (71) und dem geschätzten vorliegenden Flussvektor (51, 52) zu berechnen, und wobei die Zeitpunkte (101) so definiert sind, dass sie einem Verhalten der Halbleiterschalter (40) entsprechen, sodass eine neue gemessene Spannung an der elektrischen Maschine (10) vorhergesagt wird, um einen neuen Spannungsvektor zu erreichen, der dem berechneten Spannungsvektor entspricht.

10. Sanftanlasser-Steuervorrichtung nach Anspruch 9, wobei der Spannungsvektor (81) ein Durchschnittsspannungsvektor ist und der Modulator (100) angepasst ist, den Durchschnittsspannungsvektor in mehrere Spannungssektoren zu unterteilen, wobei jeder Spannungssektor mit einem Teil des Durchschnittsspannungsvektors beiträgt, sodass die mehreren Spannungssektoren zusammen den Durchschnittsspannungsvektor bilden, und wobei die Zeitpunkte (101) angepasst sind, so definiert zu sein, dass sie einem Verhalten des mindestens einen Halbleiterschalters (41) pro Phase entsprechen, sodass eine neue gemessene Spannung an der elektrischen Maschine (10) vorhergesagt wird, um einen neuen Spannungsvektor zu erreichen, der alle Phasen darstellt, die dem berechneten Spannungsvektor entsprechen.

## Revendications

1. Procédé (30) de contrôle de la puissance alimentée à une machine électrique (10) à l'aide d'un démarreur progressif, dans lequel au moins un commutateur semi-conducteur (41) est pourvu par phase (31, 32, 33) d'une puissance en courant alternatif, CA, de machine, les commutateurs semi-conducteurs alimentant la puissance CA de machine à la machine électrique, dans lequel ledit au moins un commutateur semi-conducteur pour chaque phase comprend un thyristor bidirectionnel ou deux thyristors anti-parallèles dédiés à une phase de la puissance CA de machine, le procédé comprenant les étapes suivantes :
application d'une puissance CA entrante (20), comprenant une tension entrante et un courant entrant, aux commutateurs semi-conducteurs (40),
mesure d'une tension et d'un courant de la puissance CA de machine (30) alimentés par les commutateurs semi-conducteurs à la machine électrique (10),
estimation d'un vecteur de flux actuel (52) et d'un état de fonctionnement actuel (51) de la machine électrique, qui est la vitesse ou le couple de la machine, sur base de la tension et du courant mesurés aux bornes de la machine électrique,
**caractérisé par** :
le calcul d'un vecteur de flux de référence (71) sur base de l'erreur entre l'état de fonctionnement actuel estimé de la machine et un état de fonctionnement désiré (61) de la machine électrique (10),
le calcul d'un vecteur de tension (81) sur base de l'erreur entre le vecteur de flux actuel estimé (52) et le vecteur de flux de référence (71), et
la définition d'instants temporels (101) pour le changement de l'état des thyristors dans les commutateurs semi-conducteurs (40) sur base du vecteur de tension (81) et de la tension entrante (24), lesdits instants temporels correspondant à un comportement des thyristors dans les commutateurs semi-conducteurs de telle sorte qu'une nouvelle tension mesurée avec un courant résultant sur la machine électrique est prédite pour obtenir un nouveau vecteur de flux estimé correspondant au vecteur de flux de référence (71).

2. Procédé selon la revendication 1, dans lequel l'étape de définition d'instants temporels (101) pour les commutateurs semi-conducteurs (40) comprend le calcul d'un vecteur de tension (81) sur base du vecteur de flux de référence (71) et du vecteur de flux actuel estimé (51, 52), et dans lequel lesdits instants temporels correspondent à un comportement des commutateurs semi-conducteurs de telle sorte qu'une nouvelle tension mesurée sur la machine électrique (10) est prédite pour obtenir un nouveau vecteur de tension correspondant au vecteur de tension calculé (81).

3. Procédé selon la revendication 2, dans lequel le vecteur de tension (81) est un vecteur de tension moyen et l'étape de calcul d'un vecteur de tension comprend la division du vecteur de tension moyen en une pluralité de secteurs de tension, dans lequel chaque secteur de tension contribue à une partie du vecteur de tension moyen, de telle sorte que les secteurs de la pluralité de secteurs de tension forment conjointement le vecteur de tension moyen, et dans lequel les instants temporels (101) correspondent à un comportement dudit au moins un commutateur semi-conducteur (41) par phase de telle sorte qu'une nouvelle tension mesurée sur la machine électrique est prédite pour obtenir un nouveau vecteur de tension correspondant au vecteur de tension calculé (81).

4. Procédé selon la revendication 3, dans lequel chaque secteur de tension représente une combinaison d'au moins deux phases, dans lequel la tension dans lesdites au moins deux phases est adaptée pour obtenir le nouveau vecteur de tension correspondant au vecteur de tension calculé (81).

5. Procédé selon l'une quelconque des revendications précédentes, dans lequel l'état de fonctionnement désiré (61) est représenté par un état de vitesse désiré de la machine électrique (10).

6. Procédé selon l'une quelconque des revendications précédentes, dans lequel l'état de fonctionnement désiré (61) est représenté par un état de couple désiré de la machine électrique (10).

7. Procédé selon l'une quelconque des revendications précédentes, dans lequel la machine électrique (10) est un moteur à induction ou un générateur à induction.

8. Dispositif contrôleur de démarreur progressif pour contrôler la puissance (30) alimentée à une machine électrique (10), le dispositif contrôleur comprenant :
au moins un commutateur semi-conducteur (41) par phase d'une puissance CA de machine (30), dans lequel les commutateurs semi-conducteurs (40) sont adaptés pour recevoir une puissance CA entrante (20) et alimenter la puissance CA de machine à la machine électrique, dans lequel la puissance CA entrante comprend une tension entrante (25) et un courant entrant, dans lequel ledit au moins un commutateur semi-conducteur pour chaque phase comprend un thyristor bidirectionnel ou deux thyristors anti-parallèles dédiés à une phase de la puissance CA de machine,
un dispositif de mesure (50) adapté pour mesurer une tension et un courant, alimentés par les commutateurs semi-conducteurs (40) à la machine électrique, sur la puissance CA de machine (30),
un dispositif d'estimation (50) adapté pour estimer un vecteur de flux actuel (52) pour la machine électrique et un état actuel (51) de la machine électrique, qui est la vitesse ou le couple de la machine, sur base de la tension et du courant mesurés aux bornes de la machine électrique,
**caractérisé par** :
un premier contrôleur (70) adapté pour calculer un vecteur de flux de référence (71) sur base de l'erreur entre l'état de fonctionnement actuel estimé de la machine électrique et un état de fonctionnement désiré (61) de la machine électrique (10),
un deuxième contrôleur (80) adapté pour calculer un vecteur de tension (81) sur base de l'erreur entre le vecteur de flux actuel estimé (52) et le vecteur de flux de référence (71), et
un modulateur (100) adapté pour définir des instants temporels (101) pour changer l'état des commutateurs semi-conducteurs (40) sur base du vecteur de tension (81) et de la tension entrante (25), lesdits instants temporels correspondant à un comportement des commutateurs semi-conducteurs, de telle sorte qu'une nouvelle tension mesurée avec un courant résultant alimenté à la machine électrique est prédite pour achever un nouveau vecteur de flux estimé correspondant au vecteur de flux de référence (71).

9. Dispositif contrôleur de démarreur progressif selon la revendication 8, dans lequel le modulateur (100) est adapté pour calculer un vecteur de tension (81) sur base du vecteur de flux de référence (71) et du vecteur de flux actuel estimé (51, 52), et dans lequel lesdits instants temporels (101) sont définis pour correspondre à un comportement des commutateurs semi-conducteurs (40) de telle sorte qu'une nouvelle tension mesurée sur la machine électrique (10) est prédite pour obtenir un nouveau vecteur de tension correspondant au vecteur de tension calculé.

10. Dispositif contrôleur de démarreur progressif selon la revendication 9, dans lequel le vecteur de tension (81) est un vecteur de tension moyen et le modulateur (100) est adapté pour diviser le vecteur de tension moyen en une pluralité de secteurs de tension, dans lequel chaque secteur de tension contribue à une partie du vecteur de tension moyen, de telle sorte que les secteurs de la pluralité de secteurs de tension forment conjointement le vecteur de tension, et dans lequel les instants temporels (101) sont adaptés pour être définis afin de correspondre à un comportement dudit au moins un commutateur semi-conducteur (41) par phase, de telle sorte qu'une nouvelle tension mesurée sur la machine électrique (10) est prédite pour obtenir un nouveau vecteur de tension représentant toutes les phases correspondant au vecteur de tension calculé.
